# EUROPEAN PATENT SPECIFICATION

(11) **EP 0 937 592 B1**
(45) Date of publication and mention of the grant of the patent: **05.06.2002**
(21) Application number: 99201031.4
(22) Date of filing: 28.11.1997
(51) Int. Cl.: B60D 1/04, A01B 59/043

(54) **Lower hook for three-point linkages**
Unterer Haken für Dreipunktgestänge
Crochet inférieur pour attelage à trois points

(30) Priority: 24.12.1996 IT BO960685
(43) Date of publication of application: 25.08.1999
(62) Divisional of application: 97120930.9
(73) Proprietor: CBM S.p.A., 41100 Modena (IT)
(72) Inventor: Cornia, Enrico Maria, 41100 Modena (IT)
(74) Representative: Provvisionato, Paolo

(56) References cited:
- EP-A- 0 523 332
- GB-A- 113 755
- PATENT ABSTRACTS OF JAPAN vol. 12, no. 336 (M-739) [3183], 9 December 1988 (1988-12-09) & JP 63 097410 A (NANMOTO K.K.)

## Description

The present invention concerns a lower hook for three-point linkages, in particular for the coupling of an implement to agricultural machinery, of the type comprising:
- a main body including a hook-shaped portion defining a recess for the selective housing, in use, of a coupling sphere of an implement,
- a blocking device housed at least partially in a cavity of the main body of the hook and selectively movable from an hook-closing extracted position to a hook-opening retracted position,
- a control lever housed in the cavity of the main body and protruding at least partially from a second opening, used to open the hook by movement of the blocking device from the extracted position to the retracted position, and
- resilient means which exert an resilient return action to move the blocking device from the retracted position to the extracted position and to hold it in that position.

A hook of the known type indicated above is described in the patent EP-0523332. Although this type of hook is undoubtedly reliable and easy to use, the purpose of this invention is to propose a series of significant improvements which allow better control, during design and manufacture of the hook, of the forces necessary to open and close the blocking device and to clamp it in the open position, and which make the hook easier to use also under difficult conditions.

More in general, the purpose of the invention is to provide a lower hook which can be manufactured easily and cheaply, is simple to use and maintain and is extremely reliable even for prolonged use under difficult conditions.

In order to achieve the above-mentioned purpose, it is an object of the invention to provide a hook of the type mentioned in the preamble of the present description, characterised in that the control lever comprises a shaped portion which, in the clamped open position of the hook only, interferes with a corresponding shaped portion provided on the main body, the interference between the two shaped portions being by itself sufficient to contrast the return action of the resilient means so as to hold the blocking device in the retracted position.

Further characteristics and advantages of the present invention will emerge from the description that follows of one example, with reference to the attached figures, provided by way of a non-limiting example, in which:
- figure 1 is a cross-sectional side-view of a hook according to the invention in the closed position, and
- figure 2 is a similar view for figure 1, illustrating the hook in the locked open position.

With reference now to the figures, reference numeral 1 globally indicates a lower hook for three-point linkages, of the type used on agricultural machinery, mounted at the end of a lower bar 2. The hook 1 comprises a hook-shaped portion 3 which defines a recess 3a shaped in such a way as to house a coupling sphere 4 of an implement which can be coupled to the agricultural machinery, and a main hollow body 5.

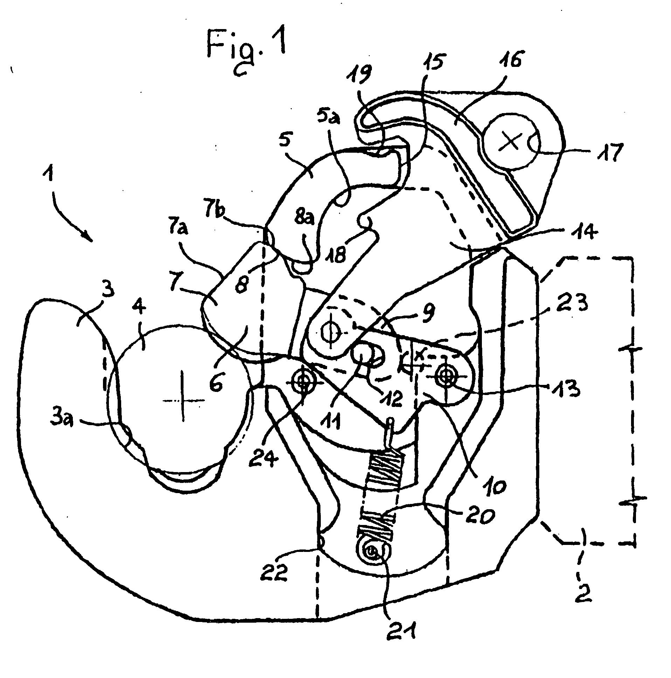

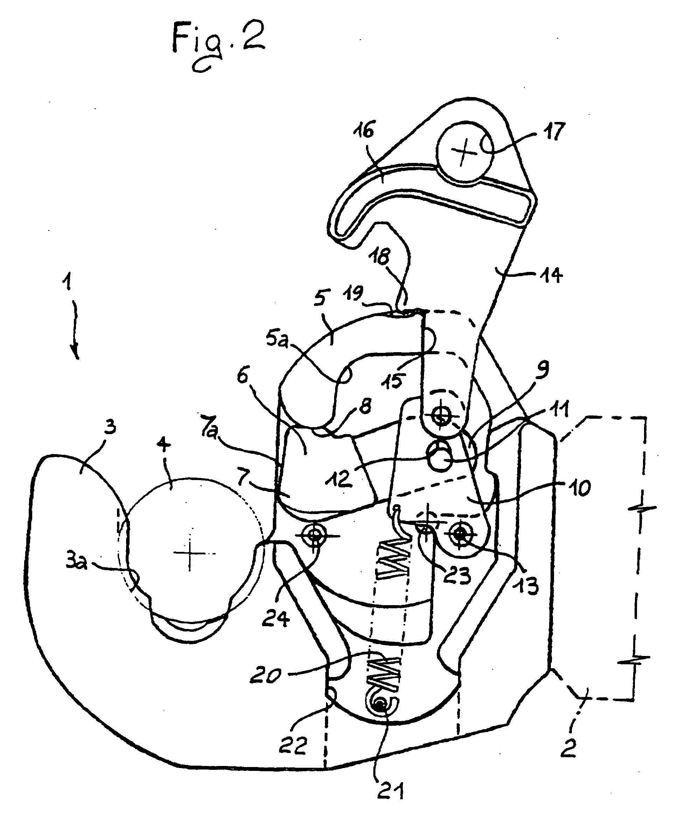

A blocking device 6 is mounted in the cavity 5a of the main body 5 and is movable from an extracted position, shown in figure 1, to a retracted position, shown in figure 2. In the extracted position, a head portion 7 of the blocking device 6 protrudes outside the main body 5 towards the hook portion 3 through a slit 8 so as to block the coupling sphere housed in the recess 3a. In the retracted position, the head 7 of the blocking device retracts towards the slit 8 inside the main body 5, freeing the recess 3a.

On the opposite side of the head 7, the blocking device 6 comprises a body 9 hinged to a pivoting lever 10 by means of a peg-slot coupling. In particular, a peg 11 is fixed to the body 9 of the blocking device and engages in a slot 12 provided in the lever 10, which is in turn hinged to the main body of the hook, within the cavity 5a, by means of a pin 13. In more general terms, the coupling between the blocking device 6 and the lever 10 is a combined sliding/rotating mechanism and can also be achieved by positioning the peg on the lever 10 and providing the blocking device 6 with the slot, or also by other coupling means known to the experts in the field, such as for example guides, recessed sections and the like.

A control lever 14 is hinged to the end of the lever 10 and extends outside the main body 5 of the hook through an upper opening 15, ending in a larger upper portion 16 which covers the opening 15 when the hook is in the closed position and the blocking device is in the extracted position. The upper part 16 has a hole 17 for the coupling of known types of pulling means. The front part of the control lever 14 comprises a clamping tooth 18 which engages with a correspondingly shaped portion 19 provided on the outside of the main body of the hook, close to and in front of the opening 15, so as to block the hook in the open position, as shown in figure 2. The shaped part 19 may be a cavity achieved by casting, by pressing, by subsequent mechanical machining, or may simply created by inserting a cross pin in the body of the hook or by other similar means.

To the lower part of the lever 10 a resilient element 20 is attached, particularly but not necessarily a helical spring, the other end of which is attached to a peg 21 or to a generic projection, positioned in correspondence with an opening 22 which communicates with the cavity 5a of the main body. The opening 22 may of course be a different shape to the one shown and, in particular, may be replaced or associated with a lateral hole or opening provided in one of the two side walls of the body of the hook. An alternative to the preferred embodiment may have a lateral hole provided in one of the side walls of the hook, the axis of which substantially coincides with the axis of the peg 21, thus allowing access to the peg during assembly, inspection and maintenance of the spring 20. In an alternative of the invention, the helical spring 20 can be replaced by a torsion or flat spring which urges against a portion of the lever 10. Moreover, in both alternative versions of the invention, the resilient element 20 can also act directly on the blocking device 6.

The inner wall of the main body 5 is shaped so as to define an abutment element 23 positioned close to the pin 13 to which the lever 10 is hinged, against which a portion of the body 9 of the blocking device 6 presses when the latter is in the extracted position shown in figure 1. A guide pin 24 is fitted inside the body of the hook to guide and support the head 7 of the blocking device 6 when this is in the retracted position shown in figure 2.

When the hook 1 is in the closed position shown in figure 1, the blocking device 6 is in the extracted position in such a way that its head 7 engages at least partially with the recess 3a to clamp a coupling sphere 4 which is housed in the recess, preventing it from slipping out. In particular, no pressure of the coupling sphere 4 on the blocking device 6 can move it from the extracted position because the upper part 7b of the head 7 is in abutment with the upper edge 8a of the slit 8, while the body 9 presses against the abutment element 23, being also partially thereunder with respect to a possible rotation of the blocking device around the contact point between the head 7 and the upper edge 8a of the slit 8.

The hook can be opened easily by applying traction to the larger portion 16, and thus on the control lever 14, so as to extract the latter from the cavity 5a. The control lever 14 rotatably pulls the lever 10 against the return action of the spring 20. As it rotates, the lever 10 pulls the blocking device 6 inside the cavity 5a towards the retracted position shown in figure 2. Once the opening position has been reached, the hook can be clamped permanently in this position by imparting a rotation to the control lever 14 so as to move the clamping tooth 18 above the upper wall of the main body 5, housing it in the cavity 19. Although not essential for clamping the control lever 14, the presence of the cavity 19 is nevertheless preferable for greater clamping security. To unclamp the control lever 14 and consequently the hook from the open position, it is in fact necessary to raise the control lever 14 slightly to release the tooth 18 from the cavity 19, countering the return action of the spring 20. Once the control lever 14 has been released, the spring 20 pulls the lever 10, causing it to rotate and once again pushing the blocking device into the extracted position shown in figure 1.

The mechanism of the hook described above makes it possible to insert a coupling sphere 4 in the recess 3a without it being necessary to manoeuvre the control lever 14. In fact, the pressure exerted by a coupling sphere 4 on the front portion 7a of the head 7 of the blocking device in the extracted position causes the latter to rotate due to the reaction with the peg 24, whereby the lever 10 is forced rotatably against the action of the spring 20, allowing the blocking device to retract inside the cavity 5a. In this case, the rotation of the lever 10 also raises the control lever 14 which, however, due to its weight, remains resting against the lower edge of the opening 15, keeping the clamping tooth 18 away from the edge on which the cavity 19 is located, thus preventing involuntary clamping of the hook in the open position.

The position of the peg 21 for the attachment of the spring, the linking position of the spring to the lever 10, the shape of the lever 10 and its hinging points for the blocking device 6 and for the control lever 14 can be varied during design to achieve even very fine adjustments of the functioning characteristics of the opening and closing mechanism of the hook and the forces necessary for these operations and for the clamping and unclamping operations.

By way of example, in the preferred embodiment shown in the figures, the lever arm of the force exerted by the spring 20 on the lever 10 varies in accordance with the rotation angle of the lever itself. In particular, this lever arm has a lower value when the hook is in the closed position, while it increases progressively until the hook is completely open, decreasing slightly when the control lever 14 is completely extracted to allow the tooth 18 to engage with the cavity 19.

## Claims

1. Lower hook for a three-point linkages, in particular for the coupling of an implement to agricultural machinery, comprising:
- a main body including a hook-shaped portion (3), defining a recess (3a) for the selective housing, in use, of a coupling sphere (4) of an implement,
- a blocking device (6) housed at least partially in a cavity (5a) of the main body of the hook from which it can protrude through a first opening (8), the blocking device being selectively movable from hook-closing extracted position to a hook-opening retracted position,
- a control lever (14) housed in the cavity of the main body and protruding at least partially from a second opening, which can be activated to control the opening of the hook by movement of the blocking device (6) from the extracted position to the retracted position, and
- resilient means (20) exerting an elastic return action to return the blocking device (6) from the retracted position to the extracted position and to hold it in that position,
**characterised in that** the control lever (14) comprises a shaped portion (18) which, in the clamped open position of the hook only, interferes with a corresponding shaped portion (19) provided on the main body (5), the interference between the two shaped portions (18, 19) being by itself sufficient to contrast the return action of the resilient means (20) so as to hold the blocking device (6) in the retracted position.

2. Lower hook for a three-point linkage according to claim 1, **characterised in that** the shaped portion of the control lever (14) is a clamping tooth (18) which is housed inside the cavity (5a) of the hook when this is in the closed position, and emerges from the second opening (15) of the hook when this is in the open position, so as to be selectively engageable with the corresponding shaped portion (19) of the body of the hook by means of a rotation of the control lever (14).

3. Lower hook for a three-point linkage according to claim 2, **characterised in that** the clamping tooth (18) is directed towards the hook-shaped portion (3) of the hook, the corresponding shaped portion of the body of the hook comprising a cavity (19) provided in the outer wall of the hook, close to the edge of the second opening (15).

4. Lower hook for a three-point linkage according to claim 1, **characterised in that** the hook also comprises a lever element (10) housed in the cavity (5a) of the main body, the blocking device (6) and the control lever (14) being linked at hinge points on the lever (10), the resilient means (20) exerting the resilient return action on the lever element (10).

5. Lower hook for a three-point linkage according to claim 4, **characterised in that** the hinge points of the blocking device (6) and of the control lever (14) on the lever (10) are spaced apart to each other, and are also spaced apart from the point at which the resilient return action exerted by the resilient means (20) acts.

6. Lower hook for a three-point linkage according to claim 1, **characterised in that** the resilient means comprise a helical spring attached at one end to the lever element and at the other end to a peg or projection fixed to the body of the hook below the lever element, in correspondence with an opening (22).

7. Lower hook for a three-point linkage according to claim 1, **characterised in that** the control lever (14) is housed in the cavity (5a) of the main body and protrudes at least partially from a second opening (15), different from the first opening (8) from which the blocking device (6) protrudes, an external portion (16) of the control lever functioning as a cover for the second opening (15) when the hook is in the closed position.

8. Agricultural machinery comprising a three-point linkage including two lower arms and one upper arm, the ends of the lower arms each being provided with a lower hook according to any of the previous claims.

## Patentansprüche

1. Unterer Haken für ein Dreipunktgestänge, insbesondere zur Kupplung eines Werkzeuges an eine landwirtschaftliche Gerätschaft, umfassend:
- einen Hautpteil, der einen hakenförmigen Abschnitt (3) aufweist, der eine Vertiefung (3a) zur teilweisen Aufnahme einer Kupplungskugel (4) eines Werkzeuges bei der Benutzung bildet,
- eine Verriegelungsvorrichtung (6), die zumindest teilweise in einem Innenraum (5a) des Hauptteiles des Hakens aufgenommen ist, aus dem sie durch eine erste Öffnung (8) herausragen kann, wobei die Verriegelungsvorrichtung wahlweise von einer den Haken schließenden ausgefahrenen Stellung in eine den Haken freigebende eingezogene offene Stellung des Hakens bewegbar ist,
- einen Betätigungshebel (14), der in dem Innenraum des Hauptteiles aufgenommen ist und zumindest teilweise aus einer zweiten Öffnung herausragt und der zur Steuerung des Öffnens des Hakens durch eine Bewegung der Verriegelungsvorrichtung (6) von der ausgefahrenen Stellung in die eingezogene Stellung betätigbar ist, und
- elastische Mittel (20), die eine elastische Rückstellkraft ausüben, um die Verriegelungsvorrichtung (6) von der eingezogenen Stellung in die ausgefahrene Stellung zurückzuversetzen und in dieser Stellung festzuhalten,
**dadurch gekennzeichnet,**
**daß** der Betätigungshebel (14) einen geformten Abschnitt (18) umfaßt, der nur in der klemmgesicherten offenen Stellung des Hakens mit einem an dem Hauptteil (5) vorgesehenen entsprechend geformten Abschnitt (19) zusammenwirkt, wobei die Zusammenwirkung der beiden geformten Abschnitte (18, 19) für sich ausreicht, um die Rückstellkraft der elastischen Mittel (20) zu überwinden, so daß die Verriegelungsvorrichtung (6) in der eingezogenen Stellung gehalten wird.

2. Unterer Haken für ein Dreipunktgestänge nach Anspruch 1, **dadurch gekennzeichnet, daß** der geformte Abschnitt des Betätigungshebels (14) ein Klemmzahn (18) ist, der in dem Innenraum (5a) des Hakens aufgenommen ist, wenn sich dieser in der geschlossenen Stellung befindet, und aus der zweiten Öffnung (15) des Hakens herauskommt, wenn sich dieser in der offenen Stellung befindet, so daß er durch eine Drehung des Betätigungshebels (14) gewünschtenfalls mit dem entsprechend geformten Abschnitt (19) des Hakenkörpers in Eingriff bringbar ist.

3. Unterer Haken für ein Dreipunktgestänge nach Anspruch 2, **dadurch gekennzeichnet, daß** der Klemmzahn (18) auf den hakenförmigen Abschnitt (3) des Hakens hin gerichtet ist und der entsprechend geformte Abschnitt des Hakenkörpers eine Vertiefung (19) umfaßt, die in der Außenwand des Hakens nahe dem Rand der zweiten Öffnung (15) vorgesehen ist.

4. Unterer Haken für ein Dreipunktgestänge nach Anspruch 1, **dadurch gekennzeichnet, daß** der Haken auch ein Hebelelement (10) umfaßt, das in dem Innenraum (5a) des Hauptteiles aufgenommen ist, und die Verriegelungsvorrichtung (6) und der Betätigungshebel (14) an Drehpunkten mit dem Hebelelement (10) verbunden sind, wobei die elastischen Mittel (20) die elastische Rückstellkraft auf das Hebelelement (10) ausüben.

5. Unterer Haken für ein Dreipunktgestänge nach Anspruch 4,
**dadurch gekennzeichnet, daß** die Drehpunkte der Verriegelungsvorrichtung (6) und des Betätigungshebels (14) auf dem Hebelelement (10) voneinander beabstandet sind und auch von dem Punkt beabstandet sind, an dem die von den elastischen Mitteln (20) ausgeübte Rückstellkraft angreift.

6. Unterer Haken für ein Dreipunktgestänge nach Anspruch 1, **dadurch gekennzeichnet, daß** die elastischen Mittel eine Spiralfeder umfassen, die mit einem Ende an dem Hebelelement und mit dem anderen Ende mit einer Öffnung (22) in dem Hauptteil ausgerichtet an einem Zapfen oder Vorsprung befestigt ist, der an dem Hakenkörper unterhalb des Hebelelements angeordnet ist.

7. Unterer Haken für ein Dreipunktgestänge nach Anspruch 1, **dadurch gekennzeichnet, daß** der Betätigungshebel (14) in dem Innenraum (5a) des Hauptteiles aufgenommen ist und die zumindest teilweise aus einer zweiten Öffnung (15) herausragt, die zweite Öffnung (15) von der ersten Öffnung (8), aus der die Verriegelungsvorrichtung (6) herausragt, verschieden ist, wobei ein äußerer Abschnitt (16) des Betätigungshebels als Abdeckung für die zweite Öffnung (15) wirkt, wenn sich der Haken in der geschlossenen Stellung befindet.

8. Landwirtschaftliche Gerätschaft umfassend ein Dreipunktgestänge mit zwei unteren Trägern und einem oberen Träger, wobei die Enden der unteren Träger jeweils mit einem unteren Haken gemäß einem beliebigen der vorhergehenden Ansprüche ausgestattet sind.

## Revendications

1. Crochet inférieur pour un attelage à trois points, en particulier pour l'accouplement d'un outil à une machine agricole, comprenant :
- un corps principal comportant une partie en forme de crochet (3) définissant une cavité (3a) pour le logement sélectif en utilisant d'une sphère d'accouplement (4) d'un outil,
- un dispositif de blocage (6) logé au moins partiellement dans une cavité (5a) du corps principal du crochet dont il peut faire saillie via une première ouverture (8), le dispositif de blocage étant déplaçable sélectivement, depuis une position extraite de fermeture de crochet vers une position ouverte rétractée d'ouverture de crochet, du crochet,
- un levier de commande (14) logé dans la cavité du corps principal et faisant saillie au moins partiellement d'une deuxième ouverture, levier qui peut être actionné pour commander l'ouverture du crochet par le déplacement du dispositif de blocage (6) depuis la position extraite vers la position rétractée, et
- des moyens élastiques (20) exerçant une action de rappel élastique pour ramener le dispositif de blocage (6) depuis la position rétractée vers la position extraite et pour le maintenir dans cette position,
**caractérisé en ce que** le levier de commande (14) comprend une partie façonnée (18) qui, dans la position ouverte, serrée, du crochet seulement, interfère avec une partie façonnée (19) correspondante prévue sur le corps principal (5), l'interférence entre les deux parties façonnées (18, 19) suffisant en elle-même à s'opposer à l'action de rappel des moyens élastiques (20), de manière à maintenir le dispositif de blocage (6) dans la position rétractée.

2. Crochet inférieur pour un attelage à trois points selon la revendication 1, **caractérisé en ce que** la partie façonnée du levier de commande (14) est une dent de serrage (18) qui est logée à l'intérieur de la cavité (5a) du crochet, lorsque ce dernier se trouve dans la position fermée, et sort de la deuxième ouverture (15) du crochet, lorsque ce dernier se trouve dans la position ouverte, de manière à pouvoir s'engager sélectivement contre la partie façonnée (19) correspondante du corps de crochet, par une rotation du levier de commande (14).

3. Crochet inférieur pour un attelage à trois points selon la revendication 2, **caractérisé en ce que** la dent de serrage (18) est orientée vers la partie en forme de crochet (3) du crochet, la partie façonnée correspondante du corps du crochet comprenant une cavité (19) prévue dans la paroi extérieure du crochet, près du bord de la deuxième ouverture (15).

4. Crochet inférieur pour un attelage à trois points selon la revendication 1, charactérisé en ce que le crochet comprend également un élément de levier (10), logé dans la cavité (5a) du corps principal, le dispositif de blocage (6) et le levier de commande (14) étant articulé en des points d'articulation sur le levier (10), les moyens élastiques (20) exercent l'action de rappel élastique sur l'élément de levier (10).

5. Crochet inférieur pour un attelage à trois points selon la revendication 4, **caractérisé en ce que** les points d'articulation du dispositif de blocage (6) et du levier de commande (14) sur le levier (10) sont espacés les uns des autres et sont également espacés du point auquel agit l'action de rappel élastique exercée par les moyens élastiques (20).

6. Crochet inférieur pour un attelage à trois points selon la revendication 1, **caractérisé en ce que** les moyens élastiques comprennent un ressort hélicoïdal fixé, par une extrémité, à l'élément de levier et, par l'autre extrémité, à une cheville ou saillie fixée au corps du crochet, au-dessous de l'élément de levier en correspondance avec une ouverture (22).

7. Crochet inférieur pour un attelage à trois points selon la revendication 1, **caractérisé en ce que** le levier de commande (14) est logé dans la cavité (5a) du corps principal et fait saille au moins partiellement d'une deuxième ouverture (15), différente de la première ouverture dont fait saillie le dispositif de blocage (6), une partie extérieure (16) du levier de commande servant de couvercle pour la deuxième ouverture (15) lorsque le crochet se trouve dans la position fermée.

8. Machine agricole comprenant un attelage à trois points, comportant deux bras inférieurs et un bras supérieur, les extrémités des bras inférieurs étant chacune pourvues d'un crochet inférieur selon l'une quelconque des revendications précédentes.
